# EUROPÄISCHE PATENTANMELDUNG

(11) **EP 1 249 635 A2**
(43) Veröffentlichungstag der Anmeldung: **16.10.2002**
(21) Anmeldenummer: 01129686.0
(22) Anmeldetag: 13.12.2001
(51) Int. Cl.: F16F 13/10

(54) **Hydraulisches Zweikammer-Lager zur Dämpfung von Schwingungen**

(30) Priorität: 09.04.2001 DE 10117661
(71) Anmelder: Carl Freudenberg KG, 69469 Weinheim (DE)
(72) Erfinder: Freudenberg, Tillmann, Dr., 64658 Fürth/Steinbach (DE); Moog, Erhard, 69517 Gorxheimertal (DE)

(57) **Zusammenfassung**

Hydraulisches Zweikammerlager zur Dämpfung von Schwingungen, insbesondere Motorlager an Kraftfahrzeugen, mit einer Motorlagerplatte mit einer Tragfeder aus gummielastischem Material, einer Arbeitskammer und einer Ausgleichskammer für die Flüssigkeit, die durch eine mit Durchtrittsöffnungen versehene Trennwand voneinander getrennt sind und einer die Ausgleichskammer abschließenden elastischen Druckmembran, dadurch gekennzeichnet, dass die Fluidmenge der durch die Durchtrittsöffnungen (6) der Trennwand (5) durchfließenden Flüssigkeit in Abhängigkeit von der Amplitude (A) der Schwingungen gesteuert ist.

## Beschreibung

### Technisches Gebiet

Die Erfindung betrifft ein hydraulisches Zweikammer-Lager zur Dämpfung von Schwingungen, insbesondere ein Motorlager an Kraftfahrzeugen mit einer Motorlagerplatte mit einer Tragfeder aus gummielastischen Material, einer Arbeitskammer und einer Ausgleichskammer für die Flüssigkeit, die durch eine mit Durchtrittsöffnungen versehene Trennwand voneinander getrennt sind und einer die Ausgleichskammer abschließenden, elastischen Druckmembran.

### Stand der Technik

Durch die DE 30 27 742 A1 ist ein Zweikammermotorlager mit hydraulischer Dämpfung bekannt geworden, das eine hohe Dämpfung bei geringer Steifigkeit aufweist, um dadurch eine zunehmende Dämpfung bei höheren Amplituden zu erreichen und größere Stöße optimal zu unterdrücken. Bei hochfrequenten Schwingungen kleiner Amplituden soll das Lager hydraulisch jedoch nicht ansprechen. Hierfür ist das Lager mit einer Zwischenwand als Trennwand versehen, die auf hochfrequente Schwingungen kleiner Amplituden anspricht und die mit einer sich bei hohen Drücken selbsttätig verschließenden Drossel versehen ist. Kleine Amplituden mit hoher Frequenz werden durch eine entsprechende Zwischenplatte gedämpft, ohne dass ein Flüssigkeitsaustausch zwischen der Arbeits- und Ausgleichskammer stattfindet. Bei Schwingungen mit größer werdenden Amplituden und niedriger Frequenz findet jedoch eine zunehmende Dämpfung durch zunehmenden Flüssigkeitsaustausch statt. Von Nachteil bei dieser Lösung ist die relativ schmalbandige Wirkungsweise des Lagers. Die Arbeitsweise solcher Lager ist durch Geometrie, Masse und Steifigkeit der im Lager eingesetzten, schwingungsfähigen Systeme festgelegt. Das bedeutet, dass derartige Systeme jeweils nur für einen speziellen Belastungsfall ausgelegt werden können.

Um hier eine Verbesserung zu erreichen, wurden Motorlager mit einer Tilgermasse versehen. Ein solches Lager wird in der DE 32 44 295 A1 behandelt. Hierdurch wurde ein Lager erreicht, bei dem hohe Schwingungsamplituden des Motors stark gedämpft werden, wobei das Dämpfungsmaximum auf die Eigenfrequenz des Motors gelegt werden kann, und bei kleinen Amplituden die hydraulische Dämpfung entkoppelt ist, so dass sich ein optimales, akustisches Verhalten ergibt. Die Tilgermasse wird von einem Dauermagneten mit elektrischer Spule betätigt und es liegt ein elektrisch beeinflussbares Entkopplungssystem vor, mit dem ein weiter Frequenzbereich erfasst werden kann. Der generelle Nachteil solcher Lager liegt darin, dass auch sie in ihrer Wirkung auf vorgegebene Frequenzbereiche abzustimmen sind und dort wirksam werden.

Die Anforderungen an eine optimale Motorlagerung haben zwei Ursachen, nämlich zum einen resultieren sie aus dem Schwingverhalten der Karosserie bedingt durch die Fahrbahngegebenheiten, und zum anderen vom Motor selbst bedingt durch seine Betriebszustände. Die durch die Fahrbahnunebenheiten bewirkten Schwingungen liegen im Niederfrequenzbereich bei etwa 7 bis 8 Hz mit hohen Amplituden. Um diesen entgegenzuwirken, soll das Lager eine hohe Steifigkeit mit hoher Dämpfung haben. Die Dämpfung wird durch die zwischen den beiden Kammern bestehende Flüssigkeitssäule erreicht und durch die in der Arbeitskammer vorhandene Flüssigkeit in Verbindung mit der Tragfeder aus gummielastischem Material. Die Flüssigkeit strömt je nach Druckrichtung von der Arbeitskammer in die Ausgleichskammer und zurück.

Die durch den Antriebsmotor hervorgerufenen Schwingungen sind in zwei Bereiche zu unterteilen und zwar Schwingungen im Leerlaufbereich mit einer mittleren Frequenz von 12 bis 15 Hz und mittleren Amplituden sowie Schwingungen bei normalem Motorbetrieb in einem weiten Frequenzbereich mit kleinen Amplituden. Dieses hat zur Folge, dass im Leerlaufbereich für die Lagerung eine geringe Steifigkeit mit geringer Dämpfung erforderlich ist, während im normalen Motorbetrieb bei höheren Frequenzen eine sehr niedrige Steifigkeit für das Lager verlangt wird. Das Lager soll hier weich sein. Letzteres wird durch die Vibrationen der eingesetzten Membranen erzielt.

Bei bisherigen Zweikammermotorlagern, gleichgültig ob sie passiv oder aktiv ausgebildet waren, wurde das Augenmerk darauf gerichtet, eine hohe Dämpfung mit einer hohen Steifigkeit des Lagers im niederfrequenten Bereich bis etwa 30 Hz und eine geringe Steifigkeit im Frequenzbereich über 30 Hz bei nur noch geringen Amplituden zu erreichen. Durch die DE 41 41 332 C2 ist beispielsweise ein umschaltbares Lager bekannt geworden, das auf verschiedene Frequenzbereiche umgeschaltet werden kann. Die die Kammer trennende Trennwand ist mit einer Durchtrittsöffnung versehen, die über ein Stellglied verschließbar ist. Das Stellglied wird durch Unterdruck betätigt und hält während des Betriebs die Durchtrittsöffnung geschlossen. Durch eine solche schaltbare Membran können gute Gebrauchseigenschaften des Lagers erreicht werden.

Wünschenswert ist jedoch eine Ausbildung eines Lagers bei der zum einen eine noch bessere Anpassungsmöglichkeit des Lagers an die Schwingungsfrequenzen möglich ist und zum anderen das Lager unabhängig von einer Unterdrucksteuerung ist. Dieses steht im Zusammenhang mit neueren Entwicklungen insbesondere bei Dieselmotoren, bei der eine starke Dämpfung im niederfrequenten Bereich im Leerlauf gewünscht wird und bei der Unterdruckeinrichtungen zur Betätigung des Lagers nicht vorhanden sind.

### Darstellung der Erfindung

Die Lösung der gestellten Aufgabe erfolgt mit den Merkmalen des Anspruchs 1. Die Erfindung wendet sich ab von den bisherigen Lagerausbildungen, die auf niedrigfrequente Schwingungsdämpfung und hochfrequente akustische Isolierung ausgerichtet waren und stellt an ihre Stelle ein Zweikammerlager, das von einer Dämpfung von Schwingungen niedriger Frequenz mit hohen Amplituden bis zu Dämpfungen von Schwingungen hoher Frequenz mit kleinen Amplituden stufenlos übergehen kann, so dass ein Lager mit hoher Steifigkeit für kleinste Frequenzen bis zu größter Weichheit bei höchsten Frequenzen hergestellt werden kann. Dieses wird dadurch erreicht, dass die Fluidmenge der durch die Durchtrittsöffnungen der Trennwand durchfließenden Flüssigkeit in Abhängigkeit von der Amplitude der Schwingungen gesteuert ist. Je geringer die Frequenz und je höher die Amplituden, umso geringer die durch die Durchtrittsöffnungen durchfließende Fluidmenge und umgekehrt. Dies kann soweit gehen, dass bei niedrigsten Frequenzen der Durchfluss gänzlich gesperrt wird und bei sehr hohen Frequenzen die Durchtrittsöffnungen völlig frei gegeben werden.

Die konstruktive Lösung zur Steuerung der durch die Durchtrittsöffnungen durchfließenden Fluidmenge sieht nicht vor, dass die Durchtrittsöffnungen durch ein an der Trennwand anliegenden und gegenüber der Trennwand verstellbaren, mit zu den Durchtrittsöffnungen korrespondierenden und die Durchtrittsöffnungen überdeckenden beziehungsweise freigebenden Durchtrittskanäle versehenes schwingendes Stellelement kontinuierlich verschließbar sind. Die Verstellung des Stellelements erfolgt mit einer Frequenz, die oberhalb der von der Fahrbahn oder der Leerlaufdrehzahl des Motors erzeugten Schwingungsfrequenz liegt. Dadurch reagiert das Lager äußerst schnell auf auftretende Frequenzänderungen im Schwingungsverhalten.

Die Verstellbewegung des Stellelements wird bevorzugt mit einer Schwingungsfrequenz durchgeführt, die mindestens das x-fache, vorzugsweise das y-fache bis z-fache, der am Motor vorhandenen Leerlauffrequenz beträgt. Bei Frequenzen oberhalb von 30 Hz werden die Durchtrittsöffnungen vom Stellelement völlig freigegeben. Die Dämpfung akustischer Schwingungen erfolgt dann allein durch die Flüssigkeitssäule. Die Schwingbewegung des Stellelements ist dann eingestellt.

Das Stellelement ist frei schwingbar ohne Anschlagbegrenzer angeordnet. Sein Antrieb kann durch einen Drehmagneten oder auch ein Elektromotor erfolgen. Für diesen Fall kann die Trennwand senkrecht zur Lagerachse ausgerichtet sein und die Kammern in Axialrichtung trennen. Die Durchtrittsöffnungen der Trennwand werden dann durch Verdrehen einer als Stellelemente dienenden Stellscheibe geöffnet beziehungsweise verschlossen.

Eine andere Möglichkeit ist gegeben, wenn die Trennwand längs zur Lagerachse ausgerichtet ist und die Kammern in radialer Richtung getrennt sind. Die in der Trennwand vorhandenen Durchtrittsöffnungen werden dann durch einen axial verschiebbaren Stellring geöffnet beziehungsweise geschlossen.

Das Verstellen der Stellelemente kann gegen Federkraft erfolgen. Denkbar sind hier auch andere Lösungen oder auch gar nur die Verwendung eines seine Drehrichtung laufend ändernden Drehmagnets.
Das Stellelement kann an der zur Ausgleichskammer weisenden Wandfläche der Trennwand angeordnet sein. Ebenso ist seine Anordnung an der zur Arbeitskammer weisenden Wandfläche denkbar.

Der Antrieb für das Stellelement richtet sich nach der Anordnung des Stellelements selbst und kann ebenfalls innerhalb oder außerhalb der Arbeitskammer durchgeführt werden.

### Kurzbeschreibung der Zeichnungen

Anhand von zwei Ausführungsbeispielen wird die Erfindung nachstehend näher erläutert.

Es zeigt
- Fig. 1: ein Zweikammerlager in schematischer Darstellung mit einem axial schwingenden Stellelement bei geschlossenen Durchtrittsöffnungen,
- Fig. 2: das Lager nach Fig. 1 mit voll geöffneten Durchtrittsöffnungen,
- Fig. 3: ein Zweikammerlager im Schnitt mit einem verdrehbaren Stellelement und
- Fig. 4: den Steifigkeitsverlauf des Lagers im Diagramm dargestellt in Abhängigkeit von der Zeit.

### Ausführung der Erfindung

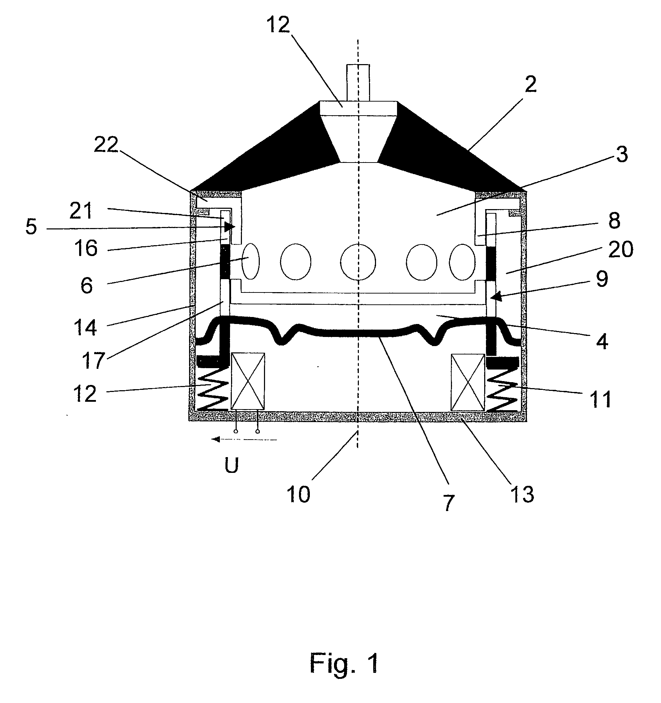

Das in der Fig. 1 im Schnitt schematisch dargestellte hydraulische Zweikammerlager 1 besteht im wesentlichen aus der Tragfeder 2 aus gummielastischem Material und der darunter liegenden Arbeitskammer 3 und Ausgleichskammer 4 für die darin eingefüllte Flüssigkeit. Arbeitskammer 3 und Ausgleichskammer 4 sind durch die Trennwand 5 getrennt, die mit den Durchtrittsöffnungen 6 versehen ist. Die Ausgleichskammer 4 ist durch den Rollbalg 7 nach außen abgeschlossen. Die Trennwand 5 ist topfförmig ausgebildet und ihre Seitenwand 8 ist von dem Stellelement 9 eingefasst, das die Öffnungen 6 verschließt beziehungsweise öffnet. Das Stellelement 9 ist längs zur Lagerachse 10 verschiebbar. Dieses wird nach oben durch die Federn 11 und in Gegenrichtung durch den Magneten 12 bewirkt. Die Feder 11 und der Stellmagnet 12 sind auf dem Boden 13 eines Gehäuses 14 angeordnet. Der Rollbalg ist mit seinem Außenrand fest mit der Wandung 14 verbunden. Außerdem ist das Stellelement 9 als Stellring ausgebildet und flüssigkeitsdicht vom Rollbalg 7 eingefasst. Das Gehäuse 14 ist in an sich bekannter Weise mit der Karosserie und die Motorlagerplatte 15 mit einem Motor verbunden. Der Stellring ist mit den Durchtrittsöffnungen 16 und 17 versehen, über die bei entsprechender Lage des Stellrings zu den Durchtrittsöffnungen 6 die Flüssigkeit aus der Arbeitskammer 3 in die Ausgleichskammer 4 und umgekehrt fließen kann.

In der gezeigten Lage des Stellrings 9 hat das Motorlage seine höchste Steifigkeit. Die Durchtrittsöffnungen 6 sind durch den Stellring 9 verschlossen. Durch den starken Druck auf die Motorlagerplatte 15 und das Gehäuse 14 ist die Tragfeder 2 als Blähfeder nach außen ausgewölbt. Durch eine durch die Magneten 12 eingeleitete Axialbewegung am Stellring 9 wird der Stellring 9 entgegen der Federkraft der Feder 11 nach unten bewegt. Die Flüssigkeit aus der Arbeitskammer 3 kann durch den dann an den Öffnungen 6 und 16 auftretenden Spalt in den Seitenraum 20 im Gehäuse 14 und von dort in die Ausgleichskammer 4 fließen. Das Lager wird dadurch weicher und kann sich bei entsprechender Steuerung durch den Magneten 12 und damit des Stellrings 9 in seiner Steifheit an die Schwingamplitude beziehungsweise -frequenz anpassen. Der Stellring 9 ist so eingesetzt, dass er frei schwingt. Dies wird dadurch zum Ausdruck gebracht, dass zwischen dem oberen Rand 21 des Stellrings 9 und dem Anschlussflansch 22 des Gehäuses 14 ein freier Spalt 23 vorhanden ist.

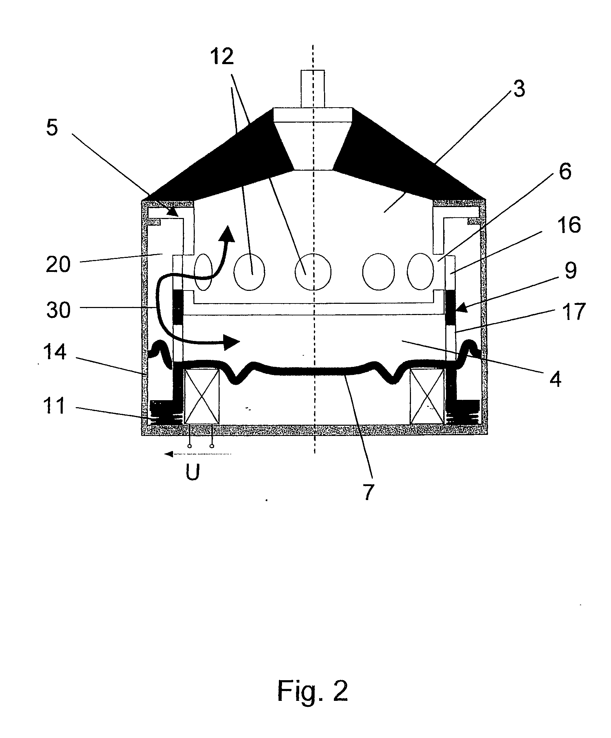

In der Fig. 2 ist das Lager nach Fig. 1 gezeigt, wobei der Stellring 9 in seine Endlage nach unten geschoben ist und auf diese Weise die Öffnungen 6 zur Gänze freigibt. Die Flüssigkeit kann jetzt ungehindert zwischen der Arbeitskammer 3 und der Ausgleichskammer 4 strömen in Abhängigkeit von den gegebenen Druckverhältnissen. Durch den Pfeil 30 ist die Strömungsmöglichkeit angedeutet. Die Feder 11 ist zusammengedrückt und der Rollbalg 7 nach unten gezogen. In dieser Lage des Stellrings 9 hat das Lager 1 seine größte Weichheit. Die Öffnungen 6 in der Trennwand 5 ergeben im Zusammenwirken mit den Öffnungen 16 und 17 im Stellring 9 und gegebenenfalls mit dem Ringraum 20 im Gehäuse 14 die gewünschte Dämpfung bei höher frequenten Schwingungen. Das Lagerkonzept basiert darauf, das Einschwingverhalten des Motors auf seiner elastischen Lagerung durch Steifigkeitsänderungen zu stören. Dabei spielt es keine Rolle, wie die Eigenschwingungen angeregt werden.

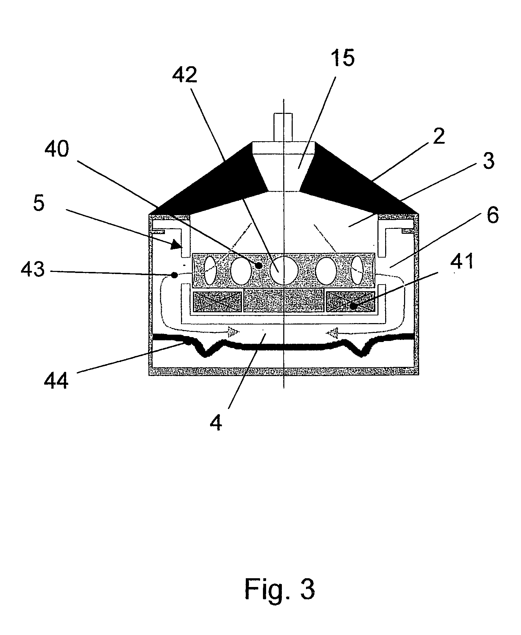

In der Fig. 3 ist eine Ausführungsform schematisch im Längsschnitt gezeigt, bei der der Stellring 40 als drehbarer Ring innerhalb der Arbeitskammer 3 angeordnet ist. Diese Anordnung lässt es zu, dass eine Drehmagnet 41 ebenfalls in die Arbeitskammer 3 eingesetzt werden kann. Das Auflager 15 mit der Tragfeder 2 und die Trennwand 5 haben den gleichen Aufbau wie in den voranstehenden Figuren schon behandelt. Die Öffnungen 6 in der Trennwand 5 können durch die entsprechend zugeordneten Öffnungen 42 im Stellring 40 geöffnet beziehungsweise verschlossen werden. In der gezeigten Stellung überdecken sich die Öffnungen 42 und 6, so dass die Flüssigkeit, wie mit den Pfeilen 43 angedeutet, ungehindert aus der Arbeitskammer 3 in die Ausgleichskammer 4 fließen kann. Die Ausgleichskammer 4 ist durch den Rollbalg 44 abgeschlossen. Diese Lösung zeichnet sich durch eine einfache Lagerung des Stellrings 40 aus. Die zu beschleunigenden Massen sind auf ein Minimum reduziert.

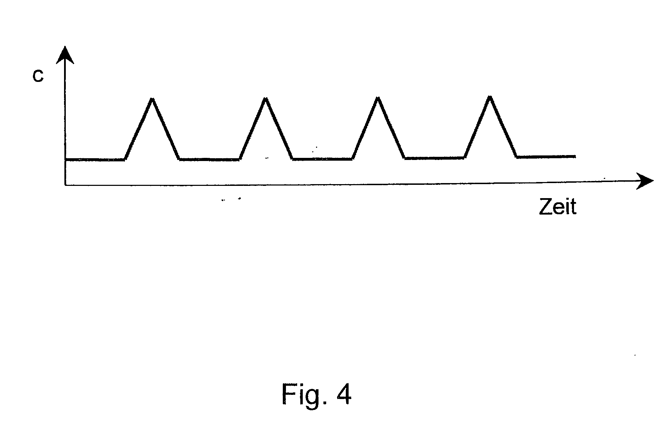

In der Fig. 4 ist ein Diagramm dargestellt, in dem die Steifheit des Lagers in Abhängigkeit von der Zeit aufgetragen ist. Durch diesen beispielhaft aufgezeigten Steifigkeitsverlauf ist es möglich, dass das Lager optimal auf die anregenden Frequenzen reagiert. Dieser Steifigkeitsverlauf wurde mit Hilfe eines Simulationsprogramms entwickelt. Erst die oben beschriebene Art der Aktorik ermöglicht es einen solchen Steifigkeitsverlauf mit der benötigten Genauigkeit zu erzeugen. Es ist durchaus denkbar, dass andere Steifigkeitsverläufe eine ähnliche Wirkung erzielen, die jedoch mit der beschriebenen Lagerkonzeption ebenso erzeugt werden können.

## Patentansprüche

1. Hydraulisches Zweikammerlager zur Dämpfung von Schwingungen, insbesondere Motorlager an Kraftfahrzeugen, mit einer Motorlagerplatte mit einer Tragfeder aus gummielastischem Material, einer Arbeitskammer und einer Ausgleichskammer für die Flüssigkeit, die durch eine mit Durchtrittsöffnungen versehene Trennwand voneinander getrennt sind und einer die Ausgleichskammer abschließenden elastischen Druckmembran, **dadurch gekennzeichnet, dass** das die Fluidmenge der durch die Durchtrittsöffnungen (6) der Trennwand (5) durchfließenden Flüssigkeit in Abhängigkeit von der Amplitude (A) der Schwingungen gesteuert ist.

2. Hydraulisches Zweikammerlager nach Anspruch 1, **dadurch gekennzeichnet, dass** die Durchtrittsöffnungen (6) durch eine an der Trennwand (5) anliegenden und gegenüber der Trennwand (5) verstellbaren, mit zu den Durchtrittsöffnungen (6) korrespondierenden und die Durchtrittsöffnungen (6) überdeckenden beziehungsweise freigebenden Durchtrittskanäle (16) versehenes schwingendes Stellelement (9, 40) kontinuierlich verschließbar sind.

3. Hydraulisches Zweikammerlager nach Anspruch 1 oder 2, **dadurch gekennzeichnet, dass** das Stellelement (9, 40) mit einer Frequenz verstellt wird, die oberhalb der Schwingungsfrequenz liegt, die von der Fahrbahn oder der Leerlaufdrehzahl des Motors erzeugt wird.

4. Hydraulisches Zweikammerlager nach einem der Ansprüche 1 bis 3, **dadurch gekennzeichnet, dass** die Verstellbewegung des Stellelements (9, 40) eine Schwingungsfrequenz hat, die mindestens das x-fache, vorzugsweise das y-fache bis z-fache, der am Motor vorhandenen Leerlauffrequenz hat.

5. Hydraulisches Zweikammerlager nach einem der Ansprüche 1 bis 4, **dadurch gekennzeichnet, dass** das Stellelement (9, 40) die Durchtrittsöffnungen (6) bei höheren Frequenzen nur teilweise verschließt.

6. Hydraulisches Zweikammerlager nach einem der Ansprüche 1 bis 5, **dadurch gekennzeichnet, dass** das Stellelement (9, 40) die Durchtrittsöffnungen (6) bei Frequenzen oberhalb von 30 Hz völlig freigibt.

7. Hydraulisches Zweikammerlager nach einem der Ansprüche 1 bis 6, **dadurch gekennzeichnet, dass** bei einer Motorfrequenz oberhalb des Leerlauffrequenzbereichs bei voll geöffneten Durchtrittsöffnungen (6) die Schwingbewegung der Stellelemente (9, 40) eingestellt ist.

8. Hydraulisches Zweikammerlager nach einem der Ansprüche 1 bis 7, **dadurch gekennzeichnet, dass** das Verstellelement frei schwingbar ohne Anschlagbegrenzer angeordnet ist.

9. Hydraulisches Zweikammerlager nach einem der Ansprüche 1 bis 8, **dadurch gekennzeichnet, dass** die Trennwand (5) senkrecht zur Lagerachse (10) ausgerichtet ist, die Kammern (3, 4) in axialer Richtung trennt und dass deren Durchtrittsöffnungen (6) durch eine verdrehbare Stellscheibe geöffnet beziehungsweise geschlossen werden.

10. Hydraulisches Zweikammerlager nach einem der Ansprüche 1 bis 8, **dadurch gekennzeichnet, dass** die Trennwand (5) längs zur Lagerachse (10) ausgerichtet ist, die Kammern (3, 4) in axialer Richtung trennt und dass deren Durchtrittsöffnungen (6) durch einen verdrehbaren Stellring (9) geöffnet beziehungsweise geschlossen werden.

11. Hydraulisches Zweikammerlager nach einem der Ansprüche 1 bis 10, **dadurch gekennzeichnet, dass** das Stellelement (9) durch einen Drehmagneten oder einen Elektromotor in Drehschwingungen versetzt wird.

12. Hydraulisches Zweikammerlager nach einem der Ansprüche 1 bis 11, **dadurch gekennzeichnet, dass** der Drehmagnet (12) oder Elektromotor innerhalb der Arbeitskammer (3) angebracht ist.

13. Hydraulisches Zweikammerlager nach einem der Ansprüche 1 bis 8, **dadurch gekennzeichnet, dass** die Trennwand (5) längs zur Lagerachse (10) ausgerichtet ist; die Kammern (3, 4) in axialer Richtung trennt und dass deren Durchtrittsöffnungen (6) durch einen axial verschiebbaren Stellring (9) geöffnet beziehungsweise geschlossen werden.

14. Hydraulisches Zweikammerlager nach Anspruch 13, **dadurch gekennzeichnet, dass** das Verstellen der Stellelemente (9) gegen Federkraft erfolgt.

15. Hydraulisches Zweikammerlager nach einem der Ansprüche 1 bis 14, **dadurch gekennzeichnet, dass** das Stellelement (9) an der zur Ausgleichskammer (4) weisenden Wandfläche der Trennwand angeordnet ist.

16. Hydraulisches Zweikammerlager nach einem der Ansprüche 1 bis 14, **dadurch gekennzeichnet, dass** das Stellelement (9) an der zur Arbeitskammer (3) weisenden Wandfläche der Trennwand (5) angeordnet ist.

17. Hydraulisches Zweikammerlager nach einem der Ansprüche 1 bis 16, **dadurch gekennzeichnet, dass** die Durchtrittsöffnungen (6) in der Trennwand (5) mit den Öffnungen (16 und / oder 17) und gegebenenfalls der Ringkammer (20) des Gehäuses (14) aufeinander so abgestimmt sind, dass sie als Flüssigkeitssäule zur Dämpfung hochfrequenter Schwingungen dienen.
